# EUROPEAN PATENT APPLICATION

(11) **EP 4 170 616 A1**
(43) Date of publication of application: **26.04.2023**
(21) Application number: 21824931.6
(22) Date of filing: 02.06.2021
(51) Int. Cl.: G07G 1/00, G07G 1/01

(54) **INFORMATION PROCESSING SYSTEM, INFORMATION PROCESSING DEVICE, AND INFORMATION PROCESSING METHOD**

(30) Priority: 18.06.2020 JP 2020105632
(71) Applicant: Kyocera Corporation, Kyoto-shi Kyoto 612-8501 (JP)
(72) Inventor: DAI Xiaoyan, Kyoto-shi, Kyoto 612-8501 (JP)
(74) Representative: Viering, Jentschura & Partner mbB Patent- und Rechtsanwälte
(86) International application number: PCT/JP2021/021091
(87) International publication number: WO 2021/256267

(57) **Abstract**

An information processing system includes an imager and a controller. The controller performs processing on a basis of an image captured by the imager. The controller performs a process for recognizing an object included in the image and, when the recognition process fails, performs a process for estimating a cause of the failure of the recognition process. The imager performs post-processing in which the imager at least changes an imaging condition of the imager or notifies a user in accordance with a result obtained through the estimation process.

## Description

### CROSS-REFERENCE TO RELATED APPLICATIONS

The present disclosure claims priority to Japanese Patent Application No. 2020-105632 filed on June 18, 2020, the entire contents of which are incorporated herein by reference.

### TECHNICAL FIELD

The present disclosure relates to an information processing system, an information processing apparatus, and a method for processing information.

### BACKGROUND OF INVENTION

Apparatuses have been proposed that perform a payment process by recognizing, in an image captured by a camera, products to be purchased by a customer. Such an apparatus needs to recognize products promptly. An apparatus disclosed in Patent Literature 1, for example, leads an apparatus operator to change an orientation of a product to be detected to one in which the product can be easily identified, when the product cannot be identified because the product is similar to a plurality of products.

### CITATION LIST

### PATENT LITERATURE

Patent Literature 1: Japanese Unexamined Patent Application Publication No. 2018-97883

### SUMMARY

In the present disclosure, an information processing system includes an imager and a controller. The controller performs processing on a basis of an image captured by the imager. The controller performs a process for recognizing an object included in the image and, when the recognition process fails, performs a process for estimating a cause of the failure of the recognition process. The imager performs post-processing in which the imager at least changes an imaging condition of the imager or notifies a user in accordance with a result obtained through the estimation process.

In the present disclosure, an information processing apparatus includes a communicator and a controller. The communicator receives an image captured by an imager. The controller performs processing on a basis of the image captured by the imager. The controller performs a process for recognizing an object included in the image and, when the recognition process fails, performs a process for estimating a cause of the failure of the recognition process. The controller at least changes an imaging condition of the imager or notifies a user in accordance with a result obtained through the estimation process.

In the present disclosure, a method for processing information includes obtaining an image captured by an imager and performing a process for recognizing an object included in the image. The method for processing information includes performing, when the recognition process fails, a process for estimating a cause of the failure of the recognition process. The method for processing information includes performing post-processing in which at least an imaging condition of the imager is changed or a user is notified in accordance with a result obtained through the estimation process.

### BRIEF DESCRIPTION OF THE DRAWINGS

FIG. 1 is a configuration diagram illustrating an overall configuration of a payment system including an information processing system according to a present embodiment.
FIG. 2 is a configuration diagram illustrating an overall configuration of the information processing system illustrated in FIG. 1.
FIG. 3 is a functional block diagram illustrating a schematic configuration of the information processing apparatus illustrated in FIG. 2.
FIG. 4 is a diagram illustrating an example of an image captured by a camera.
FIG. 5 is a diagram illustrating a direction of a first object illustrated in FIG. 4.
FIG. 6 is a diagram illustrating recognition of a third object and a fourth object illustrated in FIG. 4.
FIG. 7 is a first example of a flowchart illustrating a process for confirming a product performed by a controller illustrated in FIG. 3.
FIG. 8 is a flowchart illustrating a process for estimating a cause of a failure of a recognition process illustrated in FIG. 7.
FIG. 9 is a second example of the flowchart illustrating the process for confirming a product performed by the controller illustrated in FIG. 3.
FIG. 10 is a flowchart illustrating a process for estimating an overlap illustrated in FIG. 9.
FIG. 11 is a flowchart illustrating a process for estimating a cause of a failure of a recognition process illustrated in FIG. 9.

### DESCRIPTION OF EMBODIMENTS

The conventional technique produces an effect only when accuracy of recognition is improved by changing an orientation of an object. An apparatus that recognizes an object might not be able to identify an object as an article due to various causes. Accuracy of recognition of an object is preferably improved by changing, using an appropriate method in accordance with various patterns where an object cannot be identified as an article, a condition under which an object is recognized.

According to an embodiment of the present disclosure that will be described hereinafter, accuracy of recognition of an object can be improved flexibly in accordance with a cause of a failure of a process for recognizing an object.

An embodiment of the present disclosure will be described hereinafter with reference to the drawings. The drawings used in the following description are schematic ones. Dimensions, ratios, and the like on the drawings do not necessarily match ones in reality.

### [System Configuration]

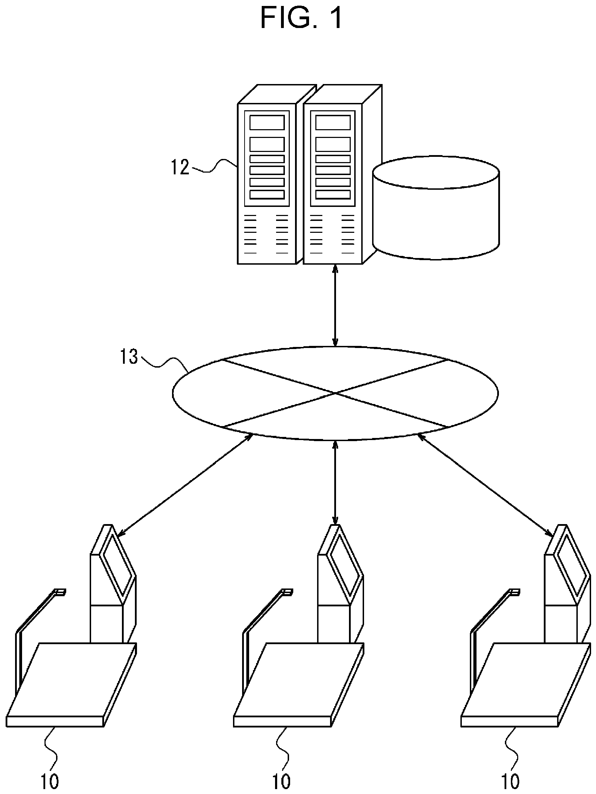

As illustrated in FIG. 1, a payment system 11 including an information processing system 10 according to an embodiment of the present disclosure includes at least one information processing system 10 and a server 12. In the present embodiment, the payment system 11 includes a plurality of information processing systems 10.

### (Information Processing Systems)

In the present embodiment, register terminals each include one of the information processing systems 10. Each of the information processing systems 10 captures an image of objects disposed by a purchaser on the corresponding register terminal. The purchaser is a user of the information processing system 10. The objects disposed by the purchaser on the register terminal are some of products sold in a store. A concept of articles includes the products sold in the store. In the present disclosure, articles also include objects other than ones of commercial transactions.

The information processing system 10 performs a process for recognizing an object in a captured image to identify the objects in the captured image as products in the store. The objects in the image refer to objects depicted in the image. The information processing system 10 transmits a result of recognition of all disposed objects to the server 12 over a network 13. The server 12 calculates an amount billed on the basis of the result of recognition. The server 12 notifies the information processing system 10 of the amount billed. The information processing system 10 presents the amount billed to the purchaser to request the purchaser to pay the amount.

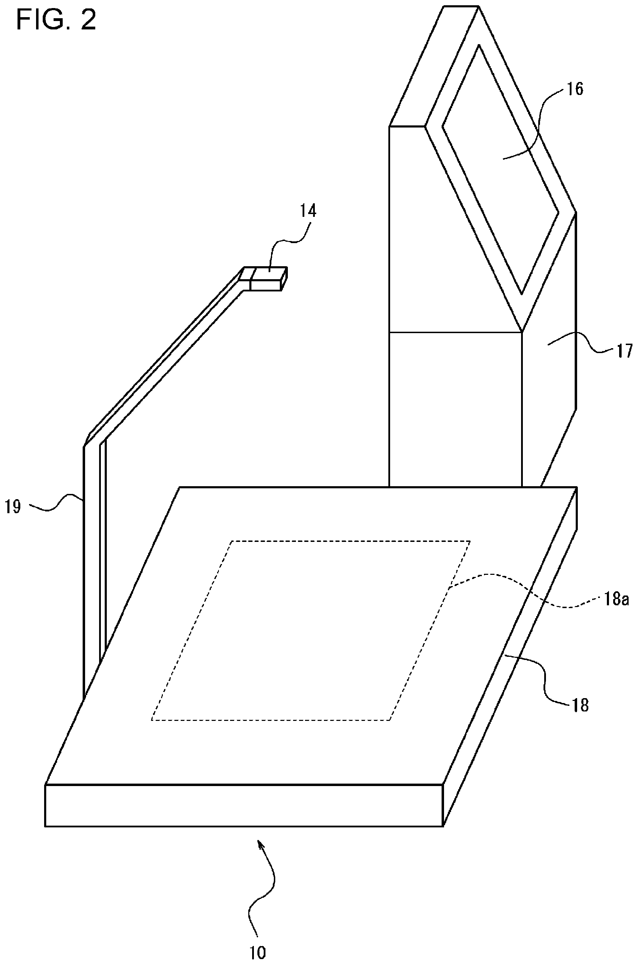

As illustrated in FIG. 2, the information processing system 10 includes a camera 14, which is an imager, and an information processing apparatus 17. The information processing system 10 may also include a display apparatus 16, a platform 18, and a support 19.

The camera 14 is fixed in such a way as to be able to capture the entirety of the platform 18. The camera 14 is fixed, for example, to the support 19 extending from a side surface of the platform 18. Means for fixing the camera 14 is not limited to the support 19. The camera 14 may be fixed above the platform 18 using any method. For example, the camera 14 may be fixed on a ceiling of the store at a position above the platform 18, instead. The camera 14 is fixed, for example, in such a way as to be able to capture the entirety of an upper surface of the platform 18, and an optical axis thereof is set perpendicular to the upper surface. In another configuration, the optical axis of the camera 14 may be inclined relative to the upper surface of the platform 18. The camera 14 may be capable of changing zoom magnification. The camera 14 successively captures images at any frame rate and generates image signals. In the present embodiment, the upper surface of the platform 18 is a surface on which objects are disposed. A direction extending vertically from the upper surface of the platform 18 to the air is an upward direction. An opposite of the upward direction is a downward direction.

The upper surface of the platform 18 is rectangular and flat. The purchaser can dispose, on the platform 18, a plurality of objects to be purchased. The platform 18 may include a weight sensor 18a for measuring the sum of weights of objects disposed on the platform 18. The weight sensor 18a may be a known sensor for measuring weight.

The display apparatus 16 is any of known displays. The display apparatus 16 displays an image corresponding to an image signal transmitted from the information processing apparatus 17. As described later, the display apparatus 16 may function as a touch screen. The display apparatus 16 may also include a speaker and have a function of outputting sound. The display apparatus 16 may function as a notification unit with which the information processing system 10 gives notifications to the purchaser. The notifications include a notification for urging, through a visual indication or a sound, the purchaser to change at least a position or an orientation of an object.

### (Information Processing Apparatus)

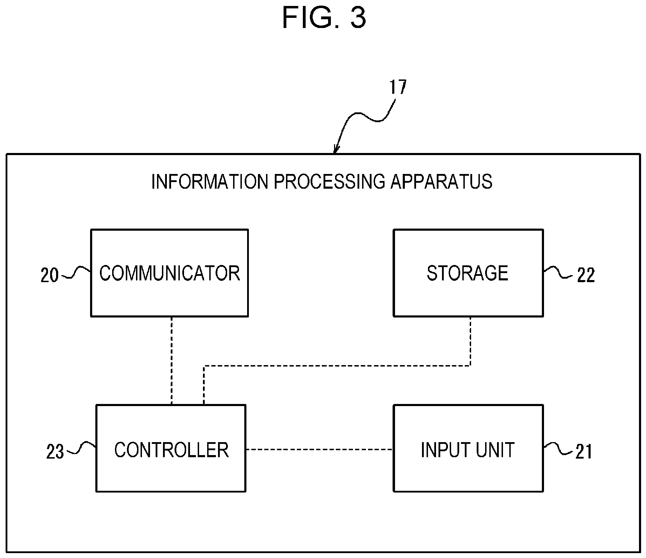

As illustrated in FIG. 3, the information processing apparatus 17 includes a communicator 20, an input unit 21, a storage 22, and a controller 23. Although the information processing apparatus 17 is separate from the camera 14 and the display apparatus 16 in the present embodiment, the information processing apparatus 17 may be integrated with, for example, at least one selected from the group consisting of the camera 14, the platform 18, the support 19, and the display apparatus 16, instead.

The communicator 20 includes a communication module that communicates with the camera 14 over a communication network including a wired or wireless network. The communicator 20 receives image signals from the camera 14. The communicator 20 includes a communication module that communicates with the display apparatus 16 over the communication network. The communicator 20 transmits, to the display apparatus 16, an image signal corresponding to an image to be displayed. The communicator 20 may transmit, to the display apparatus 16, a sound signal corresponding to a sound to be output. The communicator 20 may receive, from the display apparatus 16, a position signal corresponding to a position on a display surface at which a contact has been detected. The communicator 20 includes a communication module that communicates with the server 12 over the network 13. The communicator 20 transmits, to the server 12, result information indicating a confirmed result of recognition, which will be described later. The communicator 20 may receive, from the server 12, amount information corresponding to an amount billed.

The input unit 21 includes one or more interfaces that detect inputs made by the purchaser. The input unit 21 may include, for example, physical keys, capacitive keys, and a touch screen integrated with the display apparatus 16. In the present exemplary embodiment, the input unit 21 is a touch screen.

The storage 22 includes any storage devices such as a RAM (random-access memory) and a ROM (read-only memory). The storage 22 stores various programs for causing the controller 23 to function and various pieces of information to be used by the controller 23. The storage 22 may store product management information, which will be described later, registered for products. The controller 23 may obtain the product management information registered for the products from the server 12 as necessary and store the product management information in the storage 22.

The controller 23 includes one or more processors and a memory. The processors may include a general-purpose processor that reads a certain program and that executes a certain function and a dedicated processor specialized in certain processing. The dedicated processor may include an ASIC (application-specific integrated circuit). The processors may include a PLD (programable logic device). The PLD may include an FPGA (field-programmable gate array). The controller 23 may be an SoC (system-on-a-chip), in which one or more processors cooperate with one another, or a SiP (system in a package).

The controller 23 performs a process for recognizing an object included in an image im disposed on the platform 18 on the basis of the image im. When the recognition process fails, the controller 23 performs a process for estimating a cause of the failure of the recognition process. The controller 23 at least changes imaging conditions of the camera 14 or notifies the purchaser in accordance with a result obtained through the estimation process. The notification to the purchaser includes a notification of a change to arrangement of an object on the platform 18 or the like. Details of the processes performed by the controller 23 will be described later.

### (Server)

The server 12 is, for example, a physical server or a cloud server. The server 12 identifies objects disposed on the platform 18 of each of the information processing systems 10 as products on the basis of result information indicating a confirmed final result of recognition transmitted from the information processing system 10. The server 12 reads sales prices of the objects from a database to calculate an amount billed to a purchaser who is using the information processing system 10. The server 12 transmits, to the information processing system 10, information indicating the amount billed.

The server 12 includes a product management DB (product management database) that includes product management information for identifying a certain product among a plurality of products and that is used by the information processing systems 10 to recognize objects. The product management information includes information such as product identifiers for identifying products and prices. The product identifiers may each be, for example, a product name or a product code allocated to a corresponding product. The product management information may also include information such as images of products, feature values used for image recognition, characters drawn on surfaces, sizes, weights, outer shapes, and information (hereinafter referred to as "direction information" as necessary) indicating how easily objects can be identified as articles in each of imaging directions. The server 12 may transmit the product management information included in the product management DB to the information processing systems 10. The storages 22 of the information processing apparatuses 17 may store the product management information transmitted from the server 12.

### (Operation of Control Unit)

As described later, the controller 23 performs the process for recognizing an object on an image im corresponding to an image signal received from the camera 14. The process for recognizing an object refers to detection of an object in an image im and identification of the object as a product. The controller 23 may perform the process for recognizing an object in two stages, namely a first stage in which the controller 23 detects an object in an image im and a second stage in which the controller 23 identifies the detected object as a product. Alternatively, for example, the controller 23 may simultaneously perform the detection of an object and the identification of the object as a product in the same process. In the present embodiment, the detection of an object in an image im refers to individual recognition of presence of the object in the image im along with a position of the object. The identification of an object as a product refers to finding, for the object, one of a plurality of certain products registered in the product management DE for the object. In the process for recognizing an object, for example, the controller 23 recognizes, as a product, each of objects disposed on the platform 18 within an imaging range of the camera 14.

The controller 23 performs the process for recognizing an object on an image of an object included in an image im using a known recognition method such as barcode detection, deep learning, pattern matching, or character recognition. The controller 23 provisionally recognizes an object in an image im as a product through the process for recognizing an object and calculates a degree of reliability of a result of the provisional recognition of the object. The degree of reliability is an indicator of likelihood (accuracy) of the result of recognition. The degree of reliability can be expressed as a percentage with a unit of % (percent), but is not limited to this.

As a result of the process for recognizing an object, the controller 23 can obtain a product identifier and a degree of reliability. In addition to the product identifier and the degree of reliability, the controller 23 may also calculate positional information regarding a detected object on the platform, size information regarding the object, information indicating an orientation of the disposed object, information indicating an outer shape of the object, information indicating height of the object, and the like. The controller 23 may obtain, as overall information regarding objects subjected to the recognition process, a measured value of the sum of weights of all objects disposed on the platform 18, the weights having been measured by the weight sensor 18a. The controller 23 may calculate the number of objects as the overall information regarding the objects subjected to the recognition process. These pieces of information may be calculated or obtained in the process for recognizing an object along with the product identifier and the degree of reliability at substantially the same timings. Alternatively, these pieces of information may be calculated or obtained as necessary in the estimation process, which will be described later, when the process for recognizing an object has failed.

The information regarding a position of a detected object on the platform will be referred to as "positional information regarding an object" hereinafter. The positional information regarding an object can be expressed, for example, as two-dimensional coordinates with directions along two sides of the rectangular platform set as directions of coordinate axes. The positional information regarding an object can be expressed as central coordinates of a bounding box, which is a minimum rectangular frame surrounding an image of the detected object. Alternatively, the positional information regarding an object can be expressed as a position of a center of gravity of an image of the detected object. The positional information regarding an object is not limited to these, and may be expressed by another method, instead.

The size information regarding an object refers to a size of an image of the object in an image im. The size information regarding an object can be expressed, for example, by lengths of two sides, namely a vertical side and a horizontal size, of a bounding box. The size information regarding an object may be expressed by an indicator other than lengths of two sides of a bounding box, instead. The size information regarding an object may be expressed, for example, by a diameter or a radius of a smallest circle that can encompass the object in an image im, instead.

The information indicating an orientation of a disposed object will be referred to as "orientation information regarding an object" hereinafter. The orientation information regarding an object indicates an orientation of the object on the platform 18 at a time when the object is a product identified as a result of provisional recognition (hereinafter referred to as a "provisional product" hereinafter). The orientation on the platform may be upward, downward, sideways, or the like. When an object includes a plurality of side surfaces, sideways can further include a plurality of directions depending on which surface faces the platform 18. The "orientation information regarding an object" may further include information regarding an angle about an axis perpendicular to the upper surface of the platform 18. A reference orientation of each product for determining upward, downward, and the like may be defined in advance and stored in the server 12 as part of the product information. Since the camera 14 captures an image of an object toward the platform 18 in a vertically downward direction in the present embodiment, an imaging direction of a product identified as a result of provisional recognition is determined once the orientation information regarding the object is determined.

The information indicating an outer shape of an object will be referred to as "outer shape information regarding an object" hereinafter. The outer shape information regarding an object is determined on the basis of an edge of an image of the object detected in an image im. The outer shape information regarding an object may be an outer shape itself of an image of the object. The outer shape information regarding an object may be coordinates of a plurality of feature points detected from an image of the object. The controller 23 may extract, as feature points, a plurality of points such as vertices or points with large curvatures included in an outer shape of an image of the object. In the case of a rectangular object in an image im, for example, four vertices may be determined as feature points.

The information indicating height of an object will be referred to as "height information regarding an object" hereinafter. The controller 23 calculates height of an object by measuring a distance to a top surface of the object in an image im captured by the camera 14. A method for measuring a distance in an image captured by the camera 14 may be a known technique. The height information regarding an object may be used to calculate the above-described orientation information regarding the object.

The controller 23 determines whether the process for recognizing an object has been successfully completed or failed. For example, the controller 23 may determine whether the recognition process has been successfully completed or failed for each of objects included in an image im by comparing a degree of reliability of a result of recognition with a first threshold. When the degree of reliability of the result of recognition is equal to or lower than the first threshold, for example, the controller 23 may determine that the recognition process has failed. The first threshold may be different between products as which objects are identified.

Alternatively, the controller 23 may determine whether the recognition process has been successfully completed by comparing the sum of weights of all objects measured by the weight sensor 18a and a calculated weight of provisional products based on the process for recognizing an object. In this case, the controller 23 calculates the calculated weight, which is the sum of weights of all provisional products recognized for all the detected objects, on the basis of weight information regarding the individual products stored in the server 12 or the storage 22. If the calculated weight is lower than the sum of the measured weights of all the objects by a certain value or larger, the controller 23 can estimate that the recognition process has failed because some products have not been recognized. If the calculated weight is higher than the sum of the measured weights of all the objects by a certain value or larger, the controller 23 can estimate that the recognition process has failed because some products have been erroneously recognized. The certain values are set in consideration of measurement errors of the weight sensor 18a, normal variation in weights of products, and the like.

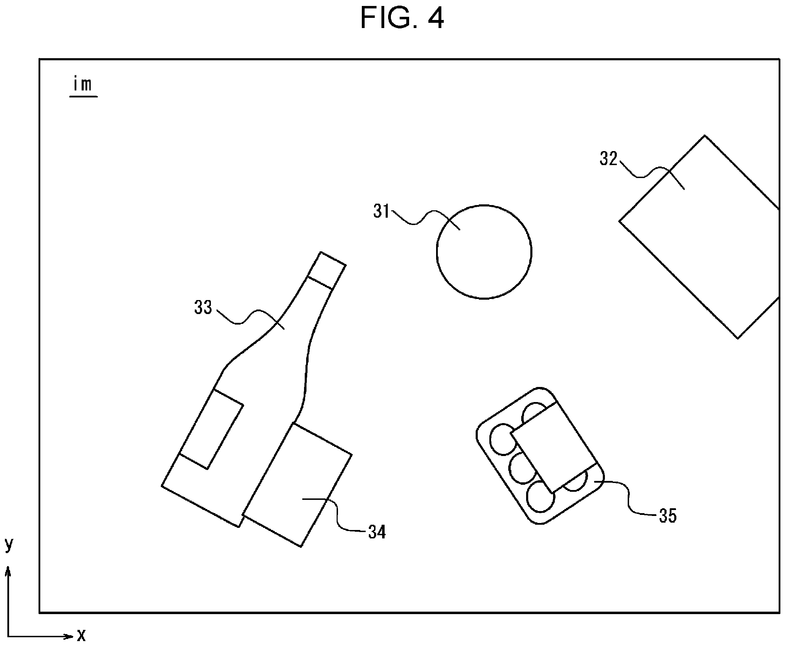

When the process for recognizing an object fails, the controller 23 estimates a cause of the failure of the recognition process. The estimation process and post-processing performed in accordance with a result of the estimation process will be described hereinafter with reference to an example of an image im captured by the camera 14 illustrated in FIG. 4. FIG. 4 is a diagram simplified just for description. The camera 14 can capture various images im in practice.

In FIG. 4, five objects, namely a first object 31, a second object 32, a third object 33, a fourth object 34, and a fifth object 35, are disposed on the platform 18. The first object 31 is, for example, a cup ramen. The second object 32 is, for example, a magazine. The third object 33 is, for example, a bottle of wine. The fourth object 34 is, for example, a can of juice. The fifth object 35 is, for example, a carton of eggs. The first object 31, the second object 32, the third object 33, and the fourth object 34 are assumed to have not been correctly recognized in the process for recognizing an object. The fifth object 35 is assumed to have been correctly recognized.

The controller 23 can estimate a cause of a failure of the recognition process performed on a certain object on the basis of a product identifier of a product identified by provisionally recognizing the certain object and size information regarding the certain object. The controller 23 obtains, from the product management DB of the server 12, registered size information regarding a product identified as a result of provisional recognition. The controller 23 can estimate whether an image of an object included in an image im overlaps an edge of the image im by comparing a size of the object detected in the image im and a registered size of a product.

Information regarding a size of each product stored in the product management DB may be information regarding a size of an image of the product captured by the camera 14 when the product is disposed on the platform 18. In this case, the controller 23 can directly compare a size of the image of an object captured by the camera 14 and the information regarding the size of the product. The information regarding the size of each product registered in the product management DB may be a size of the product in real space. In this case, the controller 23 can calculate, on the basis of the information regarding the size of a product, for example, a size of the product in an image im captured by the camera 14 when the product is disposed on the platform 18 and compare the size with a size of an image of the object in the image im captured by the camera 14.

When an object detected in an image im is smaller than a registered product, the controller 23 can estimate that an image of the object included in the image im is overlapping an edge of the image im. When a ratio of the size of the detected object to the size of the registered product is equal to or lower than a certain value, or when the detected object is smaller than the registered product by a certain value or larger, the controller 23 may estimate that the image of the object is overlapping the edge of the image im. When an image of an object is overlapping an edge of an image im, a part of an actual object is located of out of the imaging range of the camera 14 and is not captured. The certain value is set in consideration of an error in a size of an object detected in an image im, variation in a size of a product, and the like.

In FIG. 4, for example, the image im includes the entirety of the first object 31. An image of the first object 31 in the image im, therefore, is substantially the same as a size of a provisional product "cup ramen" registered in the product management DB. The image of the first object 31, therefore, is not estimated to be overlapping an edge of the image im. The second object 32, on the other hand, is disposed with a part thereof out of an area corresponding to the image im captured by the camera 14. In an embodiment, the area corresponding to the image im captured by the camera 14 may match the upper surface of the platform 18. In this case, the controller 23 can estimate, on the basis of size information regarding an object, that a process for recognizing the second object 32 has failed because the part of the second object 32 has been out of the imaging range of the camera 14.

When an error can occur between a size of a product stored in the product management DB and a size of an image of an object included in an image im, the controller 23 can compare a size, stored in the product management DB, of an object on which the recognition process has been successfully performed and a size of an image in consideration of a ratio of the sizes. In the example illustrated in FIG. 4, for example, the controller 23 calculates a ratio r of a size, stored in the product management DB, of the carton of eggs, which is the product identified by successfully recognizing the fifth object 35, to a size of an image of the fifth object 35. When a magnification rate of images of the objects is different due to a zoom state of the camera 14 or the like, for example, the controller 23 can estimate that the objects other than the fifth object 35 are also magnified or reduced as with the fifth object 35. The controller 23, therefore, may also compare a size of an object for which the recognition process has failed and a size of a product stored in the product management DB in consideration of the same ratio r.

When estimating that an image of an object included in an image im is overlapping an edge of the image im, the controller 23 can enlarge the imaging range of the camera 14 in the post-processing. By enlarging the imaging range of the camera 14, the image im can include the entirety of the object disposed on the platform 18, even a part located outside an edge of the platform 18. In another method, the controller 23 may output a notification for urging a purchaser to move the object into an inside of the imaging range of the camera 14, instead of enlarging the imaging range of the camera 14.

The controller 23 can estimate, on the basis of positional information regarding a certain object, as well as a product identifier and size information regarding the certain object, a cause of a failure of the recognition process performed on the certain object. In this case, the controller 23 can estimate whether an image of the certain object is overlapping an edge of an image im on the basis of the positional information regarding the certain object and size information regarding a product identified as a result of provisional recognition. When a ratio of a size of the detected object to a size of a registered product is equal to or lower than a certain value, or when the detected object is smaller than the registered product by a certain value or larger, for example, the controller 23 takes into consideration the positional information regarding the certain object. The controller 23 can estimate whether the product is located partly out of a recognition range more accurately than when only the product identifier and the size information regarding the certain object are used for the estimation.

The controller 23 can estimate, on the basis of a product identifier of a product identified by provisionally recognizing a certain object, a degree of reliability of the certain product, and orientation information regarding the certain object, a cause of a failure of the recognition process performed on the certain object. When little information regarding a product is obtained from an object, a degree of reliability of a product identified by provisionally recognizing the object can be low. The controller 23 can obtain direction information from the product management DB of the server 12. The direction information indicating how easily a product can be identified in each of imaging directions. When a top surface and a bottom surface of a product are defined and a product name or a characteristic design is provided on the top surface, for example, the direction information includes information indicating that the product can be easily identified when an image of the top surface of the product is captured.

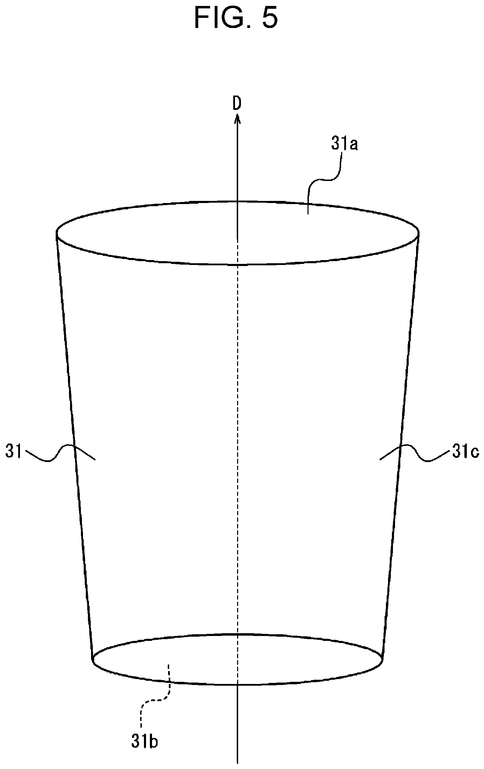

In FIG. 4, for example, an outer circumference of the first object 31 is a circle in the image im captured by the camera 14. As illustrated in FIG. 5, for example, the first object 31 includes a circular top surface 31a and a circular bottom surface 31b having a radius smaller than that of the top surface 31a, with a tapered side surface 31c provided between the top surface 31a and the bottom surface 31b. A direction D from the bottom surface 31b to the top surface 31a, for example, is defined in the product management DB for the cup ramen, which is the product identified by provisionally recognizing the first object 31. A product label might be provided on the top surface 31a of the cup ramen, and no characteristic indication might be provided on the bottom surface.

For example, the controller 23 provisionally recognizes, in the recognition process, that a product corresponding to the first object 31 is a cup ramen, but because the first object 31 is disposed with the top surface 31a facing downward, a degree of reliability might be lower than the first threshold, and the product might not be identified. In this case, the controller 23 determines, in the recognition process, that orientation information regarding the object is downward, while obtaining a product identifier through the provisional recognition and the degree of reliability. The controller 23 can obtain, from the product management DB, direction information indicating that the top surface 31a includes sufficient information for identifying the product as the cup ramen and estimate that the process for recognizing the first object 31 has failed because an imaging direction for the first object 31 has not been appropriate.

When estimating that the process for recognizing an object has failed because an orientation of an image of an object included in an image im has not been appropriate, the controller 23 may notify, in post-processing, a purchaser that an orientation of the object be changed. A change to an orientation of an object is equivalent to a change to an imaging direction for the object. The controller 23 may notify, on the basis of direction information regarding a product identified as a result of provisional recognition, the purchaser that an orientation of the object be changed such that an image im will include sufficient information for recognizing the product.

The controller 23 can estimate, on the basis of a product identifier of a product identified by provisionally recognizing a certain object, a degree of reliability of the certain object, and outer shape information regarding the certain object, a cause of a failure of the recognition process performed on the certain object. The controller 23 obtains, from the product management DB of the server 12, the outer shape information regarding the product identified as a result of the provisional recognition. When an outer shape of the product identified as a result of the provisional recognition and an outer shape of a product identified in an image im are partly different from each other in an irregular manner, the controller 23 can estimate that the certain product is overlapping another object.

In another method, the controller 23 may estimate an overlap between objects on the basis of feature points instead of the entirety of an outer shape of an object. Feature points are points that serve as features of an outer shape of an object. The controller 23 can obtain, from the product management DB, the number of feature points of a product identified as a result of provisional recognition. The controller 23 extracts feature points from an image of an object detected in an image im, and when the number of feature points is larger than that of a product that is identified as a result of provisional recognition and that is registered in the product management DB, the controller 23 can estimate that the object is overlapping another obj ect.

In the process for recognizing an object in the image im illustrated in FIG. 4, for example, the third object 33 and the fourth object 34 might be detected as one object because the third object 33 and the fourth object 34 are overlapping each other in the image im. An image including both the third object 33 and the fourth object 34, for example, can be provisionally recognized as a product of a bottle of wine. In the process for estimating a cause of a failure of the recognition process, the controller 23 obtains outer shape information stored in the product management DB of the server 12. The controller 23 may determine that objects are overlapping each other by comparing the image of the third object 33 and the fourth object 34 overlapping each other and outer shape information regarding a product of a bottle of wine obtained from the product management DB.

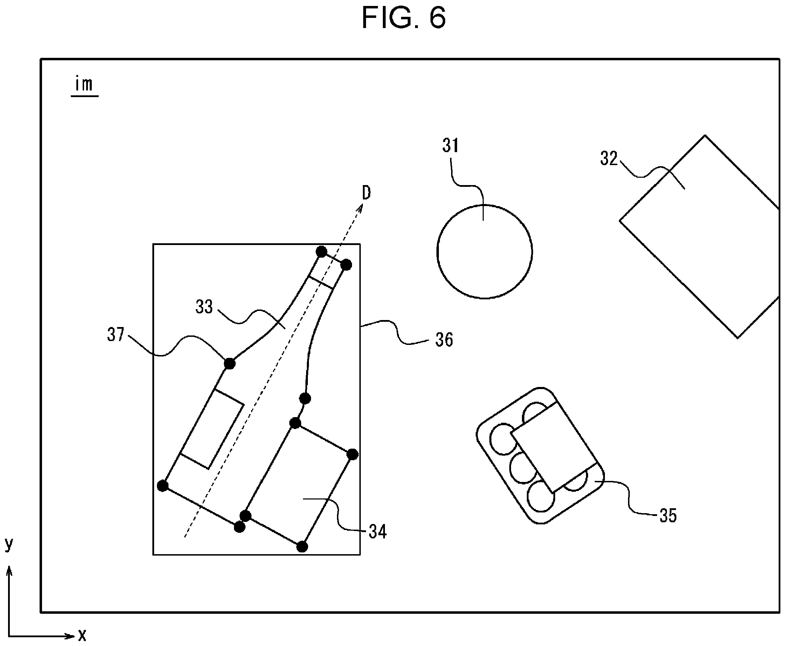

In another method, as illustrated in FIG. 6, the controller 23 detects, in the process for estimating a cause of a failure of the recognition process, the number of feature points 37 in a bounding box 36 at a time when the third object 33 and the fourth object 34 have been recognized as one object. The controller 23 obtains the number of feature points 37 of the product of a bottle of wine registered in the product management DB. When the number of feature points of a detected object is larger than the number of feature points indicated by outer shape information registered in the product management DB, the controller 23 can estimate that two or more objects are overlapping each other in the bounding box 36.

When determining whether objects are overlapping each other in an image im, the controller 23 can take into consideration the sum of weights of all objects disposed on the platform 18, the weights having been obtained from the weight sensor 18a. The controller 23 can obtain, from the product management DB of the server 12, information regarding weights of all products identified as a result of provisional recognition. The controller 23 can calculate the weights of all the products detected in the image im as a calculated weight, which is the sum of the weights of the products identified as a result of the provisional recognition. When the calculated weight and the weight measured by the weight sensor 18a are different from each other, the controller 23 can determine that the recognition process has failed for some objects. Especially when the calculated weight is lower than the weight measured by the weight sensor 18a, the controller 23 can estimate that some objects are overlapping each other in the image im.

When determining that a product identified as a result of provisional recognition is overlapping another object in an image im, the controller 23 notifies, in post-processing, the purchaser that arrangement of the objects be changed. For example, the controller 23 causes the communicator 20 to highlight the overlapping objects on the display apparatus 16 to urge the purchaser to change the arrangement of the objects. As a method for highlighting objects, an image of the objects may flash or an edge of the image of the objects may be emphasized, for example, in an image of the platform 18 displayed on the display apparatus 16.

The controller 23 might not be able to identify a product in the recognition process when some of registered products are similar to each other. Some instant foods, beverages, and the like have substantially the same package designs and only sizes thereof are different from each other. When there are such products, the controller 23 might calculate, for a plurality of products, degrees of reliability that are not significantly different from each other. When degrees of reliability of two products are both equal to or higher than a second threshold, for example, the controller 23 can estimate that the two products are similar to each other. When degrees of reliability of two products are both equal to or higher than 30% for a certain object, for example, the controller 23 can estimate that two or more products are similar to each other.

When there are similar products as described above, the controller 23 may obtain predetermined imaging conditions for one of two or more products from the product management DB of the server 12 and capture an image of an object under the imaging conditions. The imaging conditions include zoom magnification. By capturing an image under the predetermined imaging conditions, an object can be identified as one of two similar objects more accurately.

Alternatively, the controller 23 may estimate, on the basis of height information, an object to be one of similar products whose heights are different from each other an object is. When height information is used, accuracy of the estimation is expected to improve.

The controller 23 can also estimate, on the basis of height information, an orientation of a disposed product. The controller 23 may notify, in consideration of height information, the purchaser of a method for changing an orientation of an object. A case is assumed, for example, where a product identified by provisionally recognizing an object includes more information for recognizing the object when the object is laid on a side thereof than when the object is laid on a top surface or a bottom surface thereof and vertically long. When estimating, on the basis of height information, that the object is laid on the top surface or the bottom surface thereof, the controller 23 can notify the purchaser that the object be laid on the side thereof.

The controller 23 changes the imaging conditions or notifies the purchaser and performs the recognition process by capturing an object on the platform 18 again. Chances of a successful process for recognizing an object thus increase. If necessary, the controller 23 may repeat the recognition process, the process for estimating a cause of a failure of the recognition process, and the post-processing a plurality of times. After identifying all objects as products through the process for recognizing an object, the controller 23 confirms a result of the process for recognizing an object as a result of recognition.

The controller 23 controls the communicator 20 such that the communicator 20 transmits result information indicating the confirmed result of recognition to the server 12. The controller 23 receives, from the server 12, information indicating an amount billed in response to the transmission of the result information indicating the confirmed result of recognition, and then presents, to the purchaser, the amount billed. The controller 23 may present, to the purchaser, the amount billed by, for example, creating an image for requesting the purchaser to pay the amount billed and displaying the image on the display apparatus 16.

### [Image Processing Flow]

Processing performed by the controller 23 will be described. The information processing apparatus 17 may achieve the processing performed by the controller 23, which will be described hereinafter, by reading a program stored in a non-transitory computer-readable medium. The non-transitory computer-readable medium may be a magnetic storage medium, an optical storage medium, a magneto-optical storage medium, or a semiconductor storage medium, but is not limited to this.

### (First Example)

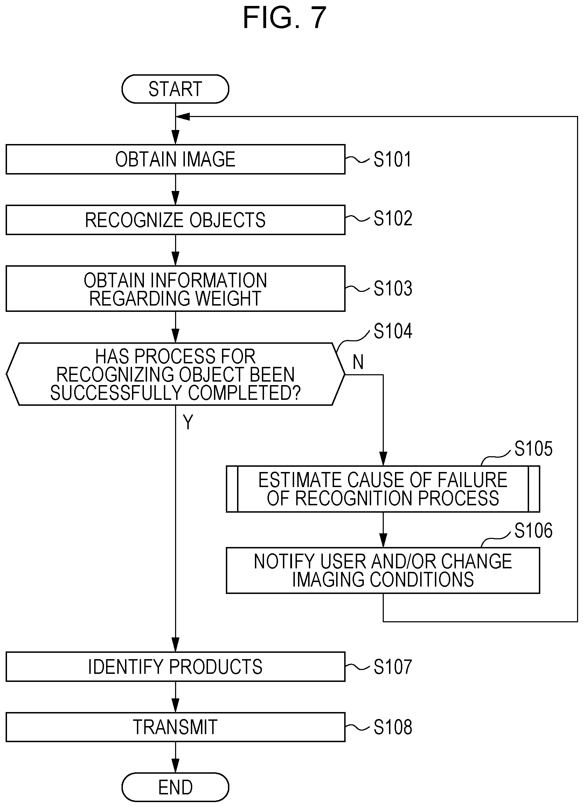

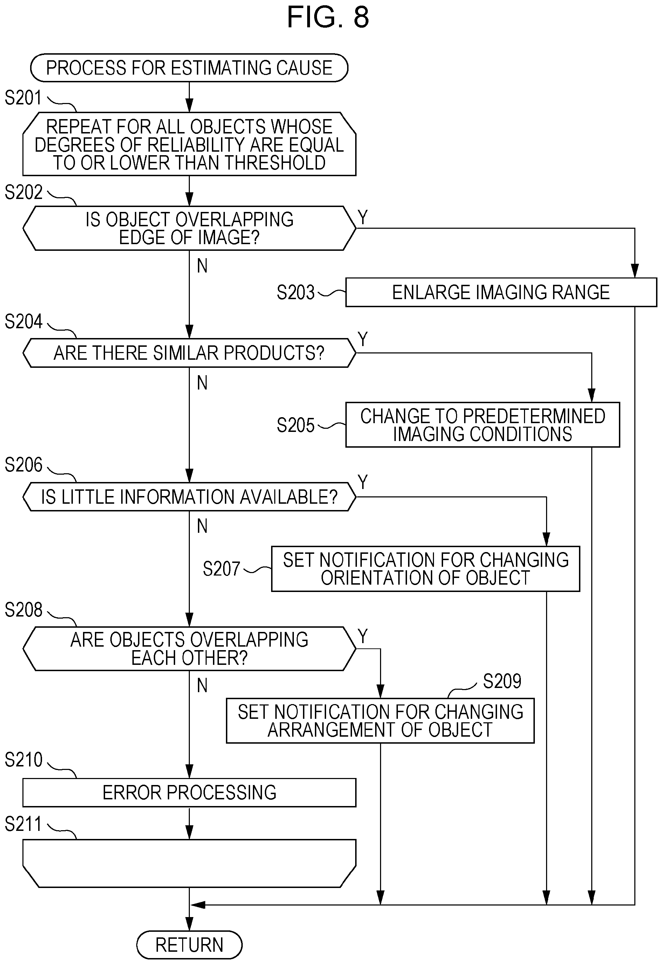

An example (first example) of information processing performed by the controller 23 according to the embodiment of the present disclosure will be described with reference to flowcharts of FIGs. 7 and 8. The processing illustrated in FIG. 7 starts each time an image signal of one frame is received from the camera 14.

First, the controller 23 obtains an image im captured by the camera 14 (step S101).

The controller 23 recognizes objects included in the obtained image im (step S102). The controller 23 detects the objects included in the image im and identifies the detected objects as provisional products. The detection of the objects and the identification as the provisional products may be performed stepwise or in the same process. The controller 23 calculates degrees of reliability of the provisional products while identifying the provisional products.

The controller 23 obtains information regarding the sum of weights of all the objects measured by the weight sensor 18a (step S103). In the embodiment, the information regarding the weights need not necessarily obtained. The information regarding the weights is not necessarily obtained after step S102. For example, the information regarding the weights may be obtained before step S 101 or step S102.

The controller 23 then determines whether the process for recognizing an object performed in step S102 has been successfully completed (step S104). The controller 23 can determine, on the basis of the degree of reliability, whether each of the objects has been successfully recognized. When the degree of reliability is equal to or lower than the predetermined first threshold, for example, the controller 23 determines that the recognition of the object has failed. If all the objects have been successfully recognized (step S104: Yes), the controller 23 proceeds to processing in step S107. If the recognition of at least one of the objects has failed (step S104: No), the controller 23 proceeds to processing in step S105.

In step S105, the controller 23 estimates a cause of a failure of the recognition process. A process for estimating a cause of a failure of the recognition process from a plurality of perspectives is one of characteristics of a method for processing information in the present disclosure. The processing in step S105 will be described with reference to FIG. 8.

In the process for estimating a cause illustrated in FIG. 8, processing in steps S202 to S210 is performed on all objects whose degrees of reliability are equal to or lower than the first threshold (step S201). Each of the steps will be described hereinafter.

The controller 23 estimates whether an image of each of the objects in an image im is overlapping an edge of a recognizable range of the image im (step S202). The controller 23 estimates whether the image of each of the objects is overlapping the edge of the image im on the basis of a size of the detected object and a size of a provisional product registered in the product management DB. The controller 23 can estimate whether the image of each of the objects is overlapping the edge of the image im also in consideration of positional information regarding the object.

If estimating that a cause of a failure of the recognition process is an overlap between the image of the object and the edge of the image im (step S202: Yes), the controller 23 proceeds to processing in step S203. In step S203, the controller 23 can enlarge an imaging range of an image to be captured such that the imaging range includes the entirety of all the objects. If estimating that the image of the object is not overlapping the edge of the image im (step S202: No), the controller 23 proceeds to processing in step S204.

The controller 23 estimates whether there are two or more products similar to the object in the image im (step S204). A case where there are products of the same type with different sizes, for example, corresponds to this. When a plurality of products is found in the process for recognizing an object and each of the plurality of products has a degree of reliability equal to or higher than the second threshold, the controller 23 can estimate that there is a plurality of similar products. The controller 23 can estimate the object as one of similar products whose sizes are different from each other by calculating height information regarding the object.

If estimating that the cause of the failure of the recognition process is presence of a plurality of similar products (step S204: Yes), the controller 23 sets the predetermined imaging conditions for the camera 14 (step S205). More specifically, the controller 23 changes the zoom magnification of the camera 14 to one set for one of the plurality of similar products. If estimating that there is not a plurality of products similar to the article (step S204: No), the controller 23 proceeds to processing in step S206.

The controller 23 estimates whether the image of the object in the image im includes little information available to identify a product (step S206). For example, the controller 23 estimates, on the basis of orientation information regarding the object at a time when the object is a provisional product, whether a surface of the object facing the camera 14 includes information available to identify a product. The controller 23 may estimate, on the basis of direction information regarding a product identified by provisionally recognizing the object, whether the image im includes available information.

If estimating that the cause of the failure of the recognition process is little information available to identify a product (step S206: Yes), the controller 23 sets a notification for urging the purchaser to change an orientation of the object disposed on the platform 18 (step S207). When the object is disposed on the platform 18 with a bottom surface with little information regarding a provisional product facing upward, for example, the controller 23 creates a message for urging the purchaser to reposition the object. If estimating that the cause of the failure of the recognition process is not little information available to identify a product (step S206: No), the controller 23 proceeds to processing in step S208.

The controller 23 estimates whether images of a plurality of objects are overlapping each other in the image im (step S208). For example, the controller 23 can estimate whether an outer shape of a provisional product recognized in the process for recognizing an object is overlapping an outer shape of another object by comparing outer shape information regarding the object and registered outer shape information regarding the provisional product. When the weights of all the products on the platform 18 obtained in step S 103 are higher than the sum of weights of provisional products recognized in the recognition process by a certain value or larger or a certain ratio or higher, the controller 23 can estimate that some objects are overlapping each other.

If estimating that the cause of the failure of the recognition process is an overlap between images of objects in the image im (step S208: Yes), the controller 23 sets a notification for urging the purchaser to change arrangement of the objects disposed on the platform 18 (step S209). The controller 23 creates a message for urging the purchaser to separate the plurality of objects overlapping each other. If estimating that the cause of the failure of the recognition process is not an overlap between objects (step S208: No), the controller 23 proceeds to processing in step S210.

When none of the estimation in steps S202, S204, S206, and S208 is applicable, the controller 23 performs error processing (step S210). For example, the controller 23 creates a message for indicating, for the purchaser, that the product cannot be identified. The controller 23 may create a screen to be displayed on the display apparatus 16 to allow the purchaser to directly input or select a product.

The controller 23 repeats the processing in step S202 to S210 for all the objects whose degrees of reliability are equal to or lower than the first threshold and when the controller 23 has finished the processing for all the objects (step S211), the controller 23 returns to the flowchart of FIG. 7.

Order in which the processing in steps S202, S204, S206, and S208 is performed is not limited to that illustrated in FIG. 8. These estimation processes may be performed in any order. When the order of steps S202, S204, S206, and S208 is changed, order of the corresponding steps S203, S205, S207, and S209, respectively, is also changed. In another embodiment, an estimation process other than steps S202, S204, S206, and S208 may be added, or a part of the estimation processes in steps S202, S204, S206, and S208 may be removed.

After step S105 in the flowchart of FIG. 7, the controller 23 notifies the purchaser and/or changes the imaging conditions on the basis of the result of the estimation process performed in step S 105 (step S106). The notification to the purchaser and/or the change to the imaging conditions are post-processing. The controller 23 can change the imaging conditions of the camera 14 by applying the change to the imaging conditions made in step S203 or S205 in FIG. 8 to the camera 14 through the communicator 20. The controller 23 can cause the display apparatus 16 to notify, using an image and a sound, the purchaser by transmitting the notification set in step S207 or S209 in FIG. 8 to the display apparatus 16 through the communicator 20.

After step S106, the controller 23 returns to step S101. The controller 23 repeats steps S101 to S106 until the process for recognizing an object is successfully completed.

If the process for recognizing an object has been successfully completed for all the objects in step S104 (step S104: Yes), the controller 23 identifies all the objects as products and confirms results of recognition (step S107).

The controller 23 controls the communicator 20 such that the communicator 20 transmits the final results of recognition confirmed in step S107 to the server 12 (step S108). A process for confirming a product thus ends.

### (Second Example)

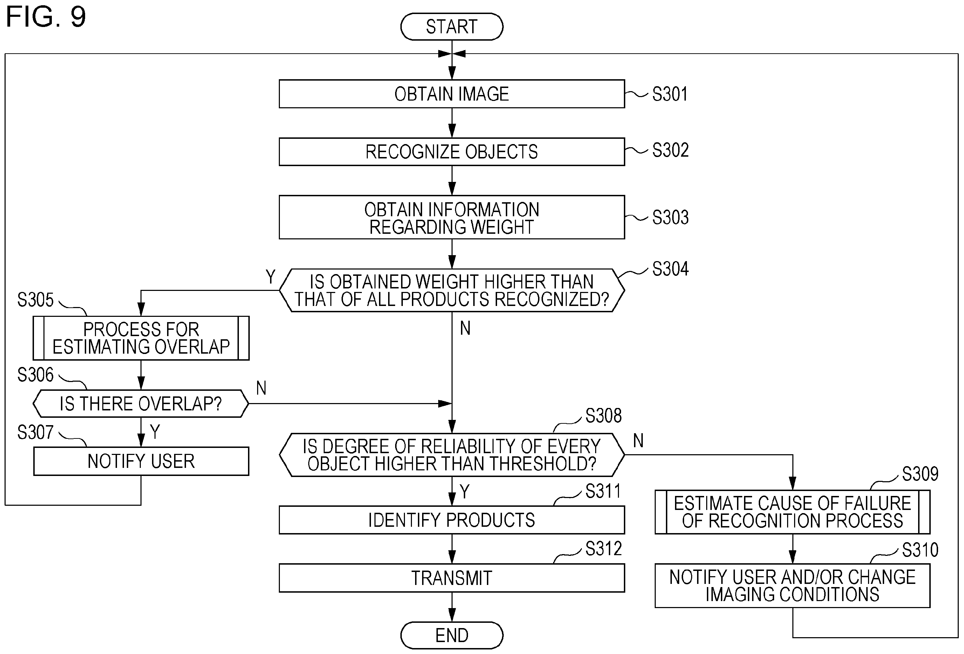

A second example of the information processing performed by the controller 23 according to the embodiment to confirm a product will be described with reference to flowcharts of FIGs. 9 to 11. The processing illustrated in FIG. 9 starts each time an image signal of one frame is received from the camera 14. In this flowchart, a cause of a failure of the process for recognizing an object is estimated in two stages. In a first stage, an overlap between objects is estimated in consideration of weights of all objects disposed on the platform 18. In a second stage, a cause of a failure of the recognition process due to other factors is estimated. Details of each of the flowcharts will be described hereinafter.

In steps S301 to S303 in the flowchart of FIG. 9, the same processing as in steps S101 to S103, respectively, in FIG. 7 is performed. In the second example, the sum of weights of all objects needs to be obtained in step S103.

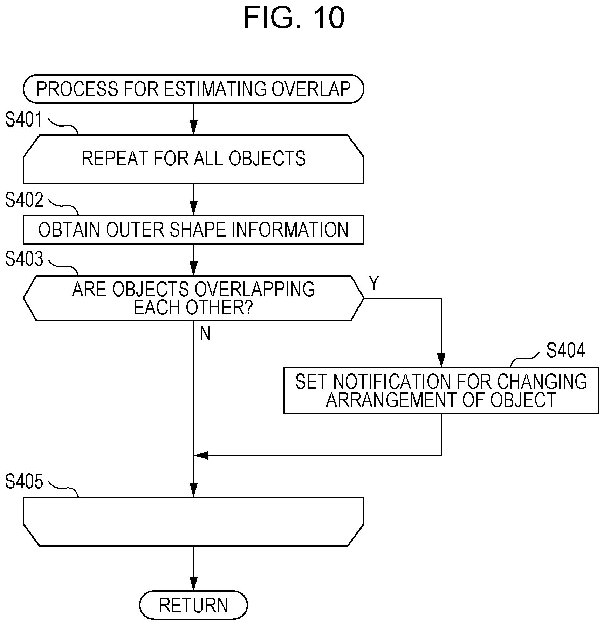

In step S304, the controller 23 determines whether the weights of all the products on the platform 18 obtained in step S 103 are higher than the sum of weights of provisional products recognized through the recognition process (step S304). The determination is made in consideration of an error in measurement. If determining that the weights of all the products on the platform 18 are higher than the sum of the weights of the provisional products recognized through the recognition process by a certain value or larger or a certain ratio or higher (step S304: Yes), the controller 23 estimates an overlap between objects in the image im (step S305). The processing in step S305 will be described with reference to FIG. 10.

In the flowchart of FIG. 10, processing in steps S402 to S404 is performed on all the objects detected through the process for recognizing an object in step S302 (step S401). Each of the steps will be described hereinafter.

First, the controller 23 obtains outer shape information regarding one of the objects from the image im (step S402).

The controller 23 estimates whether a plurality of objects is overlapping each other by comparing the outer shape information regarding the object and registered outer shape information regarding a corresponding provisional product recognized through the process for recognizing an object (step S403).

If estimating that a plurality of objects is overlapping each other (step S403: Yes), the controller 23 sets a notification for urging a user to change arrangement of the object such that the plurality of objects does not overlap each other in the image im (step S404). If estimating that a plurality of objects is not overlapping each other (step S403: No), the controller 23 returns to step S402 in order to estimate an overlap of a next object.

When an overlap in the image im has been estimated for all the objects detected in the image im (step S405), the controller 23 returns to the flowchart of FIG. 9 and proceeds to step S306.

If determining in step S306 as a result of step S305 that there are no objects overlapping each other (step S306: No), the controller 23 proceeds to step S308. If determining that there are objects overlapping each other (step S306: Yes), the controller 23 proceeds to step S307.

In step S307, the controller 23 notifies, in accordance with the notification set in step S404, the purchaser that the arrangement of the object overlapping another object be changed. That is, the controller 23 controls the communicator 20 such that the communicator 20 transmits the notification to the purchaser to the display apparatus 16. After step S307, the processing performed by the controller 23 returns to step S301.

In step S304, if the weights of all the products on the platform 18 are not higher than the weights of the provisional products recognized through the recognition process (step S304: No), the controller 23 proceeds to processing in step S308.

In step S308, the controller 23 determines whether the process for recognizing every object has been successfully completed by comparing a degree of reliability with the predetermined first threshold. If the degree of reliability of every object is higher than the first threshold (step S308: Yes), the controller 23 proceeds to processing in step S311. If the degrees of reliability of provisional products identified by recognizing one or more of the objects are lower than the first threshold (step S308: No), the controller 23 proceeds to processing in step S309.

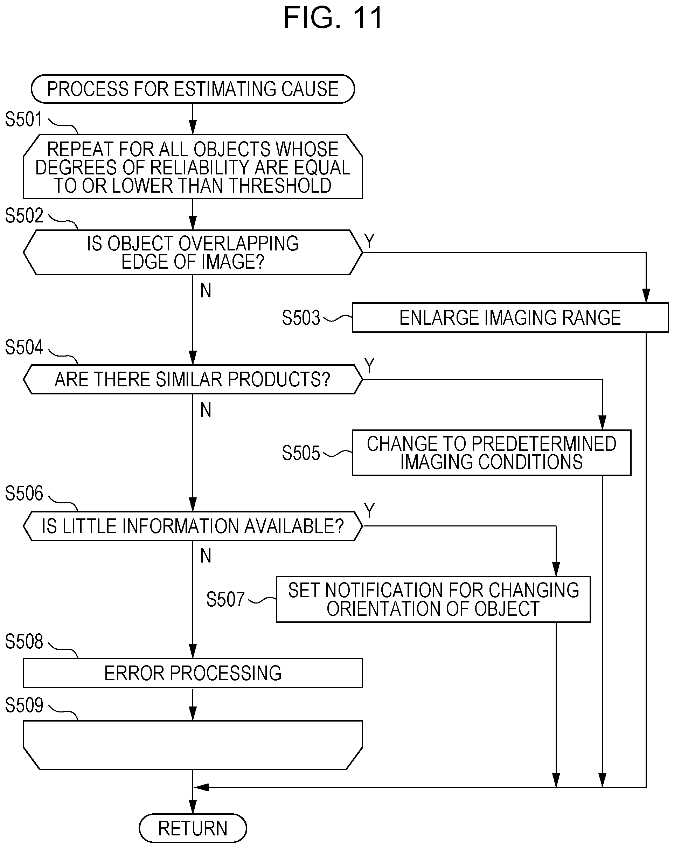

In step S309, the controller 23 estimates a cause of a failure of the recognition process. The processing in step S309 will be described with reference to the flowchart of FIG. 11.

In the process for estimating a cause illustrated in FIG. 11, processing in steps S502 to S508 is performed for all the objects whose degrees of reliability are equal to or lower than the first threshold (step S501). The processing in steps S502 to S507 in FIG. 11 is the same as steps S202 to S207, respectively, in FIG. 8. If estimating in step S506 that a cause of a failure of the recognition process is not little information available to identify a product (step S206: No), however, the controller 23 proceeds to the processing in step S508. The processing in step 508 in FIG. 11 is the same as the processing in step S210 in FIG. 8.

The controller 23 repeats the processing in steps S502 to S508 for all the objects whose degrees of reliability are equal to or lower than the first threshold. After finishing the processing for all the objects (step S509), the controller 23 returns to the flowchart of FIG. 9.

After step S309 in the flowchart of FIG. 9, the controller 23 notifies the purchaser and/or changes the imaging conditions on the basis of a result of the estimation process performed in step S309 (step S310). The notification to the purchaser and/or the change to the imaging conditions are post-processing. The controller 23 can change the imaging conditions of the camera 14 by applying the change to the imaging conditions made in step S503 or S505 in FIG. 11 to the camera 14 through the communicator 20. The controller 23 can cause the display apparatus 16 to notify, using an image and a sound, the purchaser by transmitting the notification set in step S507 in FIG. 11 to the display apparatus 16 through the communicator 20.

After step S310, the controller 23 returns to the processing in step S301. The controller 23 repeats the processing starting with step S301 until the process for recognizing an object is successfully completed.

If the degree of reliability of a provisional product determined by recognizing every object is higher than the first threshold in step S308 (step 308: Yes), the controller 23 identifies all the objects as products and confirms results of recognition (step S311).

The controller 23 controls the communicator 20 such that the communicator 20 transmits the final results of recognition confirmed in step S107 to the server 12. The process for confirming a product thus ends.

As described above, with the information processing systems 10, the information processing apparatus 17, and the method for processing information in the present disclosure, the process for estimating a cause of a failure of the recognition process is performed, and the post-processing can be performed flexibly in accordance with various causes of a failure of the process for recognizing an object. As a result, accuracy of recognizing an object improves.

In addition, with the information processing systems 10, the information processing apparatus 17, and the method for processing information in the present disclosure, the controller 23 takes into consideration, in the estimation process, a plurality of pieces of information included in sizes of individual objects, positions of the objects, outer shapes, imaging directions, and heights recognized in the recognition process. The controller 23 can also take into consideration the sum of weights of the objects measured by the weight sensor 18a. As a result, various causes of a failure of the recognition process, such as positions at which the objects are disposed, orientations of the disposed objects, and overlaps between the objects, can be estimated. Consequently, the camera 14 can be appropriately set and/or an appropriate notification can be presented to the purchaser.

In addition, since weights of all objects whose images have been captured are measured, an overlap between a plurality of objects is estimated and the purchaser is urged to change arrangement of the objects in the first stage of the method for processing information in the second example, a failure of the recognition process due to an overlap between objects can be eliminated. The process for recognizing an object can thus be performed in the second stage with a possibility of an overlap between objects in an image im reduced, and overall accuracy of the process for recognizing an object improves. Furthermore, even when the process for recognizing an object fails, images of objects are unlikely to overlap each other, and accuracy of estimating a cause of a failure of the recognition process improves.

Although an embodiment of the present disclosure has been described on the basis of the drawings and the examples, note that those skilled in the art can easily make various variations or corrections on the basis of the present disclosure. Note that the scope of the present disclosure includes these variations or corrections. For example, a function included in each component or step may be rearranged without causing a logical contradiction, and a plurality of components or steps may be combined together or divided. The embodiment of the present disclosure can also be implemented as a method performed by a processor included in an apparatus, a program, or a storage medium storing the program. Note that the scope of the present disclosure also includes these.

In the above embodiment, the server 12 stores product management information regarding a plurality of products. The controller 23 of the information processing apparatus 17 performs the process for recognizing an object and the estimation process on the basis of the product management information obtained by the storage 22 from the server 12. The controller 23 of the information processing apparatus 17, however, may perform the process for recognizing an object and the estimation process directly on the basis of product information regarding products stored in the server 12 without using the storage 22, instead. In this case, the server 12 may be regarded as functioning as a storage storing information regarding products.

In the above embodiment, the information processing apparatus 17 performs the recognition process, the estimation process, and the post-processing. The server 12 may perform some or all of these processes. In the information processing apparatus 17, for example, an image im captured by the camera 14 may be transmitted to the server 12 through the communicator 20, and the display apparatus 16 may display a result of processing performed by the server 12. In this case, the server 12 may be regarded as being included in the information processing system 10. A processor of the server 12 functions as a controller that performs processing on the basis of the image im captured by the camera 14. When the information processing apparatus 17 and the server 12 perform processing in a joint manner, the controller 23 of the information processing apparatus 17 and the processor of the server 12 function as a controller that performs the recognition process, the estimation process, and the post-processing on the basis of the image im captured by the camera 14.

In the above embodiment, a purchaser of a product disposes an object on the platform 18. A person who disposes an object on the platform 18, however, may be a store operator of a register terminal. In this case, the store operator is a user of the information processing system 10.

In the above embodiment, the controller 23 performs the estimation process using sizes of obj ects, positions of the objects in an image, outer shapes of the objects, imaging directions of the objects, and heights of the objects detected in the recognition process and the sum of weights of the objects measured by the weight sensor 18a. All of these, however, need not necessarily be taken into consideration in the estimation process. The controller 23 may perform the estimation process using at least two, three, or four of the sizes of the objects, the positions of the objects in the image, the outer shapes of the objects, the imaging directions of the objects, the heights of the objects, and the sum of the weights of the objects, instead.

In the method for processing information in the second example, when the sum of weights of a plurality of objects measured by the weight sensor 18a is higher than the sum of weights of identified products, the controller 23 determines an overlap between objects and, if determining that there is an overlap, notifies a purchaser. Even if the controller 23 cannot determine that there is an overlap, however, the controller 23 may notify, without identifying an object, a purchaser that arrangement be changed.

In the above embodiment, the register terminals include the information processing systems 10. Application targets of the information processing systems 10 in the present disclosure are not limited to the register terminals. For example, the information processing systems 10 may be applied to object recognition for, for example, checking inventory in warehouses and detecting defective products.

### REFERENCE SIGNS

- 10: information processing system
- 11: payment system
- 12: server
- 13: network
- 14: camera (imager)
- 16: display apparatus
- 17: information processing apparatus
- 18: platform
- 18a: weight sensor (sensor)
- 19: support
- 20: communicator
- 21: input unit
- 22: storage
- 23: controller
- 31: first object
- 31a: top surface
- 31b: bottom surface
- 31c: side surface
- 32: second object
- 33: third object
- 34: fourth object
- 35: fifth object
- 36: bounding box
- 37: feature point
- im: image

## Claims

1. An information processing system comprising:
an imager; and
a controller that performs processing on a basis of an image captured by the imager,
wherein the controller performs a recognition process of an object included in the image and, when the recognition process fails, performs an estimation process of a cause of failure of the recognition process and post-processing in which the controller at least changes an imaging condition of the imager or notifies a user in accordance with a result obtained through the estimation process.

2. The information processing system according to claim 1,
wherein changing the imaging condition includes a change to an imaging range.

3. The information processing system according to claim 1 or 2,
wherein notifying the user includes a notification to the user about a change to at least a position or an orientation of the object through a visual indication or a sound.

4. The information processing system according to any of claims 1 to 3, further comprising:
a storage storing information regarding a plurality of articles,
wherein the controller detects, in the recognition process, the object in the image captured by the imager and performs a process for identifying the object as one of a plurality of certain articles.

5. The information processing system according to claim 4,
wherein the controller calculates, in the recognition process, a degree of reliability indicating how likely the object is the article identified and determines whether the recognition process has been successfully completed by comparing the degree of reliability with a first threshold.

6. The information processing system according to claim 4 or 5,
wherein the storage stores information regarding sizes of the plurality of articles, and
wherein the controller calculates, in the recognition process, a size of the object on a basis of the image and obtains, in the estimation process, information regarding the size of the article identified from the storage and estimates, on a basis of the size of the object and the size of the article, whether an image of the object included in the image is overlapping an edge of the image.

7. The information processing system according to claim 6,
wherein the controller also calculates, in the recognition process, a position of the object in the image on a basis of the image and, when a ratio of the size of the object to the size of the article is equal to or lower than a certain value, or when the object is smaller than the article by a certain value or larger, estimates whether the image of the object included in the image is overlapping the edge of the image in consideration of the position of the object in the image.

8. The information processing system according to claim 6 or 7,
wherein, when estimating, in the estimation process, that the image of the object included in the image is overlapping the edge of the image, the controller enlarges an imaging range of the imager in the post-processing.

9. The information processing system according to claim 5,
wherein, when degrees of reliability of the object for two or more articles are both equal to or higher than a second threshold in the estimation process, the controller changes, in the post-processing, the imaging condition of the imager to an imaging condition determined in advance for at least one of the two or more articles.

10. The information processing system according to claim 4 or 5, further comprising:
a sensor that measures a sum of weights of all objects included in the image,
wherein the storage stores weight information indicating a weight of each of the plurality of articles, and
wherein the controller calculates, on a basis of the weight information stored in the storage, a calculated weight, the calculated weight being a sum of weights of all articles identified for all the objects detected, compares the calculated weight with the sum of the weights of all the objects measured by the sensor, determines whether the recognition process has been successfully completed, and, when determining that the recognition process has failed, notifies, in the post-processing, the user that arrangement of the object be changed.

11. The information processing system according to claim 4 or 5,
wherein the storage stores outer shape information regarding an outer shape of each of the plurality of articles, and
wherein, when estimating, in the estimation process on a basis of an outer shape of the object recognized in the image captured by the imager and outer shape information regarding the article stored in the storage, that the article identified is overlapping another article, the controller notifies, in the post-processing, the user that arrangement of the object be changed.

12. The information processing system according to claim 4 or 5,
wherein the storage stores direction information indicating how easily the plurality of articles is identified in each of imaging directions in which images of the articles are captured, and
wherein the controller recognizes, in the recognition process on a basis of the image, an imaging direction at a time when the object is the article identified, and, when the controller estimates, in the estimation process on the basis of the imaging direction and the direction information regarding the article, that an imaging direction of the object is a cause of failure of the recognition process, the post-processing includes a notification to the user that the imaging direction of the object be changed.

13. The information processing system according to claim 12,
wherein the controller calculates, in the recognition process on a basis of the image, height of the object and notifies, in the post-processing in consideration of the height, the user of a method for changing a direction of the object.

14. The information processing system according to any of claims 1 to 5,
wherein the controller performs the estimation process using two or more of a size of the object, a position of the object in the image, an outer shape of the object, an imaging direction of the object, and height of the object calculated through the recognition process and a sum of weights of objects measured by a sensor.

15. An information processing apparatus comprising:
a communicator that receives an image captured by an imager; and
a controller that performs processing on a basis of the image captured by the imager,
wherein the controller performs a recognition process of an object included in the image and, when the recognition process fails, performs an estimation process of a cause of failure of the recognition process and post-processing in which the controller at least changes an imaging condition of the imager or notifies a user in accordance with a result obtained through the estimation process.

16. A method for processing information, the method comprising:
obtaining an image captured by an imager;
performing a recognition process of an object included in the image;
performing, when the recognition process fails, an estimation process of a cause of failure of the recognition process; and
performing post-processing in which at least an imaging condition of the imager is changed or a user is notified in accordance with a result obtained through the estimation process.
